# EUROPÄISCHE PATENTANMELDUNG

(11) **EP 4 260 673 A1**
(43) Veröffentlichungstag der Anmeldung: **18.10.2023**
(21) Anmeldenummer: 23163019.5
(22) Anmeldetag: 21.03.2023
(51) Int. Cl.: A01C 5/06, A01C 7/06, A01C 7/20

(54) **ANORDNUNG EINES DÜNGESCHARS MIT EINEM SÄSCHAR UND EINEM DEM DÜNGESCHAR ZUGEORDNETEN STÜTZRAD**

(30) Priorität: 13.04.2022 DE 102022109060
(71) Anmelder: Lemken GmbH & Co KG, 46519 Alpen (DE)
(72) Erfinder: Bergerfurth, Dennis, 46459 Rees (DE); Gotzen, Christian, 41751 Viersen (DE); Krawinkel, Jan, 33100 Paderborn (DE)

(57) **Zusammenfassung**

Die vorliegende Erfindung bezieht sich auf eine Sämaschine (1) mit einer an einem Rahmen (2) befestigten Anordnung von einem Säschar (3), wobei dem Säschar (3) in Arbeitsrichtung (A) der Sämaschine (1) gesehen ein Räumwerkzeug (5) vorgeordnet ist.

Um die Arbeitsleitung des Räumwerkzeugs (5) zu verbessern, wird vorgeschlagen, dass das Räumwerkzeug (5) ortsfest mit einem Tragarm (7) verbunden ist, der beweglich mit dem Rahmen (2) verbunden ist, und mit dem Tragarm (7) ein separat vom Räumwerkzeug (5) gelagertes Tiefenführungsmittel (8) verbunden ist, das sich beim Betrieb der Sämaschine (1) auf dem Boden (B) abstützt.

## Beschreibung

Die vorliegende Erfindung bezieht sich auf eine Sämaschine mit einer an einem Rahmen befestigten Anordnung von einem Säschar, wobei dem Säschar in Arbeitsrichtung der Sämaschine gesehen ein Räumwerkzeug vorgeordnet ist.

Eine gattungsgemäße Anordnung ist aus der Schrift US 8 505 473 B1 bekannt. Die Sämaschine verfügt über einen Säschar, dem ein Räumstern vorgeordnet ist, der als Räumwerkzeug dazu vorgesehen ist, Pflanzenreste und Kluten vor dem Säschar beiseite zu räumen, damit dieses eine möglichst sauber ausgeformte Saatfurche in den Boden schneiden kann, in der dann die Saatkörner möglichst positionsgenau abgelegt werden können. Die Räumwirkung eines Räumwerkzeugs kann auf die Genauigkeit der Saatgutablage einen wesentlichen Einfluss haben, insbesondere, wenn der von der Sämaschine zu bearbeitende Ackerboden mit Pflanzenresten oder Kluten bedeckt ist, die die Ausformung der Saatfurche und die Höhenführung des Säschars negativ beeinflussen. Auch kann ein Räumwerkzeug verhindern, dass Kluten und Pflanzenreste in die Säfurche fallen, wodurch die Saatkörner zu hoch in der Säfurche abgelegt oder nach dem Schließen der Säfurche nicht optimal mit Nährstoffen für den Pflanzenwuchs versorgt werden. Ein Werkzeug, dass den Ackerboden vor dem Säschar sauber abräumt, ist damit für die Qualität der Saatgutablage und den späteren Ernteertrag mit der gesäten Feldfrucht wichtig.

Das in der Schrift US 8 505 473 B1 offenbarte Räumwerkzeug besteht aus einem Räumstern, der an einem schwenkbeweglich mit dem Rahmen verbundenen Tragarm drehbar gehalten ist. Eine besondere Tiefenführung ist für den Räumstern nicht vorgesehen. Dieser kann sich dadurch leichter in den Boden eingraben, was seine Funktion nachteilig beeinflusst.

Aus der Schrift US 2013/0192186 ist eine Sämaschine bekannt, die ebenfalls einen Räumstern als Räumwerkzeug aufweist, der dem Säschar vorgeordnet ist. Damit der Räumstern nicht zu tief in den Ackerboden eintaucht, ist auf den Räumstern ein konisch geformter Ring aufgesetzt, der mit seiner Außenumfangsfläche dazu bestimmt ist, auf dem Boden abzurollen und dadurch ein zu tiefes Eintauchen des Räumsterns in den Boden zu verhindern. Es hat sich allerdings gezeigt, dass die Tiefenführung mit dem konisch geformten Ring, der konzentrisch mit dem Räumstern auf einer gemeinsamen Welle angeordnet ist, nicht unter allen Einsatzbedingungen zu akzeptablen Arbeitsergebnissen führt. Der Durchmesser des konisch geformten Rings muss so klein sein, dass die Finger des Räumsterns ihn noch deutlich überragen. Wegen des geringen Durchmessers neigt der konische Ring dazu, während des Betriebs der Erntemaschine Material vor sich zu einem Materialkeil aufzuschieben, der sich zwischen den Außenumfang des konischen Rings und den Boden drückt. Dadurch wird der Räumstern angehoben und kann den Bereich vor dem Säschar nicht mehr sauber räumen. Der Materialkeil deckt außerdem organisches Material ab, das vor dem Räumstern auf dem Boden liegt und das deshalb nicht mehr vollständig vom Räumstern beiseite befördert werden kann.

Es ist die Aufgabe der vorliegenden Erfindung, die Räumwirkung des Räumwerkzeugs zu verbessern.

Die Aufgabe wird für eine gattungsgemäße Anordnung gelöst, indem das Räumwerkzeug ortsfest mit einem Tragarm verbunden ist, der beweglich mit dem Rahmen verbunden ist, und mit dem Tragarm ein separat vom Räumwerkzeug gelagertes Tiefenführungsmittel verbunden ist, das sich beim Betrieb der Sämaschine auf dem Boden abstützt.

Eine Funktionsverbesserung des Räumwerkzeugs lässt sich erreichen, wenn dieses besser tiefengeführt wird. Das wird erreicht, indem das Räumwerkzeug an einem schwenkbeweglich mit dem Rahmen verbundenen Tragarm befestigt ist, an dem zusätzlich ein Tiefenführungsmittel angebracht ist, wobei das Tiefenführungsmittel aber separat vom Räumwerkzeug gelagert ist. Indem das Tiefenführungsmittel nicht mehr konzentrisch auf das Räumwerkzeug aufgesetzt ist und dieses somit eine Baueinheit mit dem Räumwerkzeug bildet, kann dieses besser auf seine Tiefenführungsfunktion hin ausgelegt werden. Der Durchmesser, die Form und die Breite des Tiefenführungsmittels können frei gewählt werden, ohne auf den Durchmesser und die Form des Räumwerkzeugs Rücksicht nehmen zu müssen, und das Tiefenführungsmittel kann in einer Position angeordnet werden, in der sich das Räumwerkzeug und das Tiefenführungsmittel in ihrer Funktion nicht mehr gegenseitig behindern. Wegen dieser Vorteile aus der separaten Lagerung des Tiefenführungsmittels kann das Räumwerkzeug besser in seiner Arbeitstiefe geführt werden, wodurch die Räumwirkung des Räumwerkzeugs verbessert wird und woraus sich unmittelbar ein verbessertes Arbeitsergebnis der Sämaschine ergibt. Das Tiefenführungsmittel stützt sich mit seiner Auflagefläche während des Betriebs der Sämaschine auf dem Boden ab. Je nachdem, ob der Boden bei der Vorfahrt der Sämaschine im Bereich des Tiefenführungsmittels ansteigt oder abfällt, drückt das Tiefenführungsmittel den über ein Gelenk oder Scharnier mit dem Rahmen verbundenen Tragarm und das damit ortsfest verbundene Räumwerkzeug im Verhältnis zum Rahmen nach oben, oder der Tragarm fällt durch sein Gewicht gegenüber dem Rahmen nach unten. Über das Tiefenführungsmittel gesteuert folgt der Tragarm also ständig der Bodenkontur, und durch die Bewegungen des Tragarms wird das ortsfest mit dem Tragarm verbundene Räumwerkzeug auch immer in einem günstigen Abstand zum Boden gehalten. Durch die laufende Korrektur der räumlichen Lage des Räumwerkzeugs über das Tiefenführungsmittel geschieht es wesentlich seltener, dass sich ein Räumwerkzeug in den Boden einarbeitet oder so hoch über dem Boden gehalten wird, dass es seine Aufgabe nicht mehr erfüllen kann, die Bodenfläche vor dem Säschar von Pflanzenresten und Kluten zu räumen.

Als Tiefenführungsmittel kann ein Stützrad verwendet sein, es kommen aber auch andere geeignete Tiefenführungsmittel in Betracht, wie beispielsweise eine Gleitkufe.

Nach einer Ausgestaltung der Erfindung ist das Räumwerkzeug als ein auf einer Tragwelle drehbar gelagerter Räumstern ausgebildet. Ein Räumstern kann über den Boden abrollen, wodurch er förderaktiver wirkt und sich auch besser selbst reinigen kann. Als Räumwerkzeug können aber auch andere Mittel verwendet werden, wie beispielsweise ein pflugartig angeordnetes Abweisblech oder eine tiefengeführte Kufe mit einem Abweisbügel, über den die Kufe mit dem Tragarm verbunden ist.

Nach einer Ausgestaltung der Erfindung ist das Tiefenführungsmittel als Stützrad ausgebildet und weist einen gleich großen oder größeren Durchmesser auf als das Räumwerkzeug. Durch die voneinander getrennte Anordnung des Räumwerkzeugs und des Stützrades kann das letztere im Verhältnis zum Räumwerkzeug größer dimensioniert werden, als das vorbekannt ist. Der größere Durchmesser verbessert das Abrollverhalten. Das Stützrad rollt laufruhiger über Bodenunebenheiten ab. Ein größeres Stützrad hat mehr Masse und damit eine höhere Massenträgheit. Bei hochfrequenten Stößen glättet die größere Masse die resultierenden Bewegungen. Ein größeres Stützrad hat auch eine größere Aufstandsfläche und neigt deshalb weniger dazu, Material vor sich aufzuschieben, es rollt einfach darüber hinweg. Das ist insbesondere auf feuchten oder nassen Böden ein erheblicher Vorteil. Die Auslenkbewegungen des Tragarms fallen kleiner aus und sie verringern sich in ihrer Anzahl, wodurch das Räumwerkzeug weniger oft in den Boden sticht oder in einem zu großen Abstand zum Boden gehalten ist, so dass es die Räumfunktion nicht mehr optimal ausfüllen kann. Ein größeres Stützrad hat bei gleicher Fahrgeschwindigkeit während einer Umdrehung zudem mehr Zeit, Materialanhaftungen abzuwerfen, so dass es an seinem Außenumfang sauberer bleibt und auch dadurch die Bodenkontur genauer kopiert.

Nach einer Ausgestaltung der Erfindung sind das Räumwerkzeug und/oder das Tiefenführungsmittel in verschiedenen Höhenlagen ortsfest an dem Tragarm festlegbar. Durch die Möglichkeit, das Räumwerkzeug und/oder das Tiefenführungsmittel in verschiedenen Höhenlagen relativ zum Tragarm anzuordnen, können die Arbeitspositionen dieser Maschinenkomponenten besser an die konkreten Betriebsbedingungen beim Einsatz der Sämaschine angepasst werden. So kann es je nach Bodenart, Bodenfeuchte, des Ausmaßes der Bodenbedeckung mit organischen Pflanzenresten, der Struktur der zu verarbeitenden Pflanzenreste, der Größe und Zusammensetzung von Kluten und Steinen auf dem Boden und anderen Rahmenbedingungen wünschenswert sein, das Räumwerkzeug dichter oder in einem größeren Abstand zum Boden zu positionieren. Da das Tiefenführungsmittel mit dem Höhenabstand seiner den Boden berührenden Aufstandsfläche zum Tragarm die Höhe bestimmt, in der das Räumwerkzeug in der gewählten ortsfesten Position am Tragarm über dem Boden gehalten ist, muss entweder das Räumwerkzeug in seiner Einbauhöhe relativ zum Tragarm verstellt werden, wenn dieses dichter oder entfernter zur Bodenoberfläche gehalten werden soll, oder die Einbauhöhe des Tiefenführungsmittels relativ zum Tragarm wird verstellt, um das Räumwerkzeug dichter oder entfernter zum Boden zu halten. Es ist natürlich auch möglich, beide Komponenten verstellbar zu machen, wenn die Linie, die die untersten Punkte des Räumwerkzeugs und des Tiefenführungsmittels miteinander verbindet, in eine andere Winkellage in Verhältnis zur Waagerechten gebracht werden soll, um die Arbeitsleistung des Räumwerkzeugs zu verbessern. Zur Verstellung können werkzeuglos handhabbare Schnellverschlüsse an der Sämaschine verwendet sein, die die Verstellung vereinfachen. Zur Höhenverstellung kann beispielsweise eine Verstellkulisse mit einer Anzahl von Einstecklöchern in unterschiedlichen Höhenlagen vorgesehen sein, in die ein federbelasteter Splint wahlweise eingesteckt werden kann, um eine der Komponenten in der entsprechenden Höhenlage ortsfest am Tragarm festzulegen.

Nach einer Ausgestaltung der Erfindung ist das Tiefenführungsmittel dem Räumwerkzeug nachlaufend am Tragarm gehalten. Bei dieser Anordnung läuft das Tiefenführungsmittel mit seiner Aufstandsfläche in dem vom Räumwerkzeug freigeräumten Bodenbereich in einer Spur mit dem Räumwerkzeug. Bei dieser Anordnung des Tiefenführungsmittels wird die Tiefensteuerung mit dem Tiefenführungsmittel nicht mehr durch Material verfälscht, das auf dem eigentlichen Bodenhorizont aufliegt, wie beispielsweise Steine, Kluten oder organisches Material, weil dieses zuvor von dem Räumwerkzeug aus der Spur abgefördert worden ist.

Nach einer Ausgestaltung der Erfindung ist das Säschar in einer Flucht mit dem Räumwerkzeug und dem Tiefenführungsmittel angeordnet. Bei dieser Anordnung räumt das Räumwerkzeug den Bereich frei, in dem das nachlaufende Säschar die Saatfurche in den Boden zieht, und zwischen diesen beiden Maschinenkomponenten ist das Tiefenführungsmittel angeordnet, das in dem geräumten Bereich die Bodenkontur abtastet und gleichzeitig aber auch den Boden im Aufstandsbereich noch einmal rückverfestigt und von dem Räumwerkzeug nicht erfasste Kluten zerdrückt, wodurch die nachfolgend vom Säschar gezogene Furche sauberer und schärfer konturiert in den Boden geschnitten werden kann. Die Ablage des Saatguts in der Säfurche wird dadurch verbessert.

Nach einer Ausgestaltung der Erfindung liegt der Drehpunkt des Tragarms in Arbeitsrichtung der Sämaschine gesehen vor dem Räumwerkzeug. Mit dieser Anordnung wird das Räumwerkzeug und auch das Tiefenführungsmittel hinter dem Drehpunkt hergezogen. Das hat den Vorteil, dass das Räumwerkzeug im Überlastungsfall leicht nach oben ausweichen kann, so dass es nicht unbeabsichtigt in den Boden gedrückt werden kann.

Nach einer Ausgestaltung der Erfindung sind das Räumwerkzeug und das Tiefenführungsmittel zur Vertikalen geneigt und das Räumwerkzeug zusätzlich auch zur Arbeitsrichtung der Sämaschine in einem Winkel angestellt. Durch die Neigung des Räumwerkzeugs zur Vertikalen und der Anstellung schräg zur Arbeitsrichtung ergibt sich eine gute Räumwirkung auch in einer Richtung quer zur Arbeitsrichtung bei einer geringen Furchenbildung. Bei der Neigung des Räumwerkzeugs zur Vertikalen wird das Räumwerkzeug in einer räumlichen Lage gehalten, bei der ein in vertikaler Richtung tiefster Punkt des Räumwerkzeuges zu einer vertikalen Ebene auf die vom Düngeschar auszuformende Düngefurche einen in horizontaler Richtung geringeren Abstand aufweist als ein in vertikaler Richtung höchster Punkt des Räumwerkzeuges, so dass eine Mittelebene des Räumwerkzeugs einen von der vertikalen Ebene auf den Boden aus nach außen geneigten Sturzwinkel aufweist. Auch kann sich das Räumwerkzeug bei dieser Anordnung gut selbst reinigen. Durch die Neigung des Tiefenführungsmittels ergibt sich eine gute Selbstreinigung bei einer guten Auflage und Abstützung des Tiefenführungsmittels auf dem Boden.

Nach einer Ausgestaltung der Erfindung ist seitlich neben dem Räumwerkzeug ein Düngeschar angeordnet. Durch die Beiordnung eines Düngeschars zum Räumwerkzeug entsteht eine kompakte Baueinheit, die dem Säschar vorgeordnet ist. Das Räumwerkzeug und das Düngeschar können auf gleicher Höhe im Verhältnis zur Arbeitsrichtung der Sämaschine angeordnet sein. Dann legt das Düngeschar eine Düngerspur, und das Räumwerkzeug räumt seitlich neben dem Düngeschar den Boden frei. Es ist aber auch möglich, das Räumwerkzeug leicht dem Düngeschar voreilend anzuordnen, so dass das Räumwerkzeug in Arbeitsrichtung des Düngeschars gesehen seitlich versetzt zum Düngeschar angeordnet ist, wobei dann durch den schrägen Anstellwinkel des Räumwerkzeugs im Verhältnis zur Arbeitsrichtung aber die Möglichkeit gegeben ist, dass das Räumwerkzeug auch den Boden vor dem Düngeschar freiräumt.

Nach einer Ausgestaltung der Erfindung ist das Düngeschar am Tragarm befestigt. Da der Tragarm über das Tiefenführungsmittel tiefengeführt ist, ergibt sich daraus über die Befestigung am Tragarm auch eine Tiefenführung für das Düngeschar. Auf diese Weise werden mit einem Tiefenführungsmittel sowohl das Räumwerkzeug als auch das Düngeschar in der Arbeitstiefe gesteuert. Das Tiefenführungsmittel ist dabei vorteilhaft auch in Arbeitsrichtung des Düngeschars gesehen seitlich versetzt zum Düngeschar angeordnet, so dass sich das Düngeschar und das Tiefenführungsmittel nicht in ihrer Funktion gegenseitig behindern. Wenn das Düngeschar am Tragarm gehalten ist, ist es einfach, die Sämaschine modulartig mit einem Düngeschar auszustatten oder nicht. Wenn die Sämaschine nicht vom Hersteller mit einem Düngeschar ausgerüstet werden soll, kann das Düngeschar einfach weggelassen werden, und die Maschine wird mit einem Tragarm ausgerüstet, an dem nur das Räumwerkzeug und das Tiefenführungsmittel befestigt sind. Wünscht der Kunde ein Düngeschar an seiner Maschine, kann das Düngeschar als Ausstattungsoption leicht an den Tragarm angebaut werden. Das Düngeschar kann bei dieser Bauweise auch leicht nachträglich nachgerüstet werden. Wenn ein Kunde seine Sämaschine ohne ein Düngeschar betreiben möchte, kann das Düngeschar auch leicht abgebaut werden.

Nach einer Ausgestaltung der Erfindung ist das Düngeschar höhenverstellbar im Verhältnis zum Räumwerkzeug und dem Stützrad am Tragarm oder am Rahmen gehalten. Durch die Höhenverstellbarkeit des Düngeschars ist es möglich, die Düngerablage auf unterschiedliche Bodentiefen einzustellen. Dabei kann das Düngeschar auch über die Höheneinstellung an unterschiedliche Bodenverhältnisse angepasst werden. Zur Verstellung können werkzeuglos handhabbare Schnellverschlüsse an der Sämaschine verwendet sein, die die Verstellung vereinfachen.

Nach einer Ausgestaltung der Erfindung ist der Tragarm schwenkbeweglich mit einer Konsole verbunden, die fest mit dem Rahmen verbunden ist. Der Tragarm mit dem daran befestigten Räumwerkzeug und dem Tiefenführungsmittel, gegebenenfalls auch dem Säschar kann als Komponente gut in der Montage der Sämaschine vorgefertigt werden, so dass die Komponente dann über die Konsole einfach am Rahmen befestigt werden kann. Die Befestigung kann beispielsweise über eine Schraubverbindung erfolgen, über die die Konsole am Rahmen in der Einbaulage gehalten ist. Die Schraubmontage ist kostengünstig und reparaturfreundlich.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung mit dem Gegenstand des Anspruch 1 verwendbar, soweit dem keine technisch zwingenden Hindernisse entgegenstehen.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Gesamtansicht auf eine Sämaschine von schräg vorne,
- Fig. 2:: eine Ansicht von schräg vorne auf ein Säscharmodul mit Düngeschar,
- Fig. 3:: eine Seitenansicht auf ein Säscharmodul mit Düngeschar,
- Fig. 4:: eine Frontalansicht auf ein Säscharmodul mit Düngeschar,
- Fig. 5:: eine Ansicht von schräg vorne auf ein Säscharmodul ohne Düngeschar,
- Fig. 6:: eine Seitenansicht auf ein Säscharmodul ohne Düngeschar,
- Fig. 7:: eine Frontalansicht von vorne auf ein Säscharmodul ohne Düngeschar.

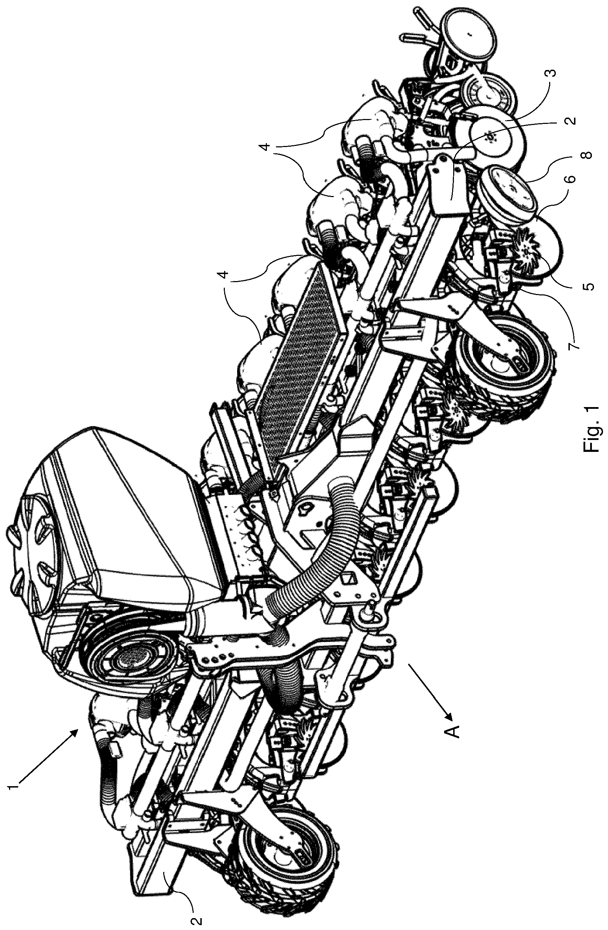

In Fig. 1 ist eine Ansicht auf eine Sämaschine 1 von schräg vorne gezeigt. Die Sämaschine 1 verfügt über einen Rahmen 2, an dem ein oder mehrere Säschare 3 befestigt sind. Wenn die Sämaschine 1 mehrere Säschare 3 wie im gezeigten Ausführungsbeispiel aufweist, sind diese im Regelfall nebeneinander auf einer Höhe oder nebeneinander und in Arbeitsrichtung A der Sämaschine 1 gesehen versetzt zueinander angeordnet. Die Säschare 3 können modulartig ausgebildet sein, so dass ein Typ einer Sämaschine 1 mit beispielsweise vier, sechs oder acht Säscharen 3 oder entsprechenden Säscharmodulen 4 hergestellt werden kann, die nach Art eines Baukastens am Rahmen 2 befestigt sind. Die von jedem Säschar 3 jeweils gezogenen Säfurchen können in gleichmäßigen Abständen zueinander in den Ackerboden gezogen werden, um darin das Saatgut abzulegen, es ist aber auch möglich, die Säschare 3 so am Rahmen 2 anzuordnen, dass die Säschare 3 das Saatgut in Doppelreihen legen, die einen geringeren Abstand zueinander aufweisen als die Doppelreihe zur benachbarten Doppelreihe.

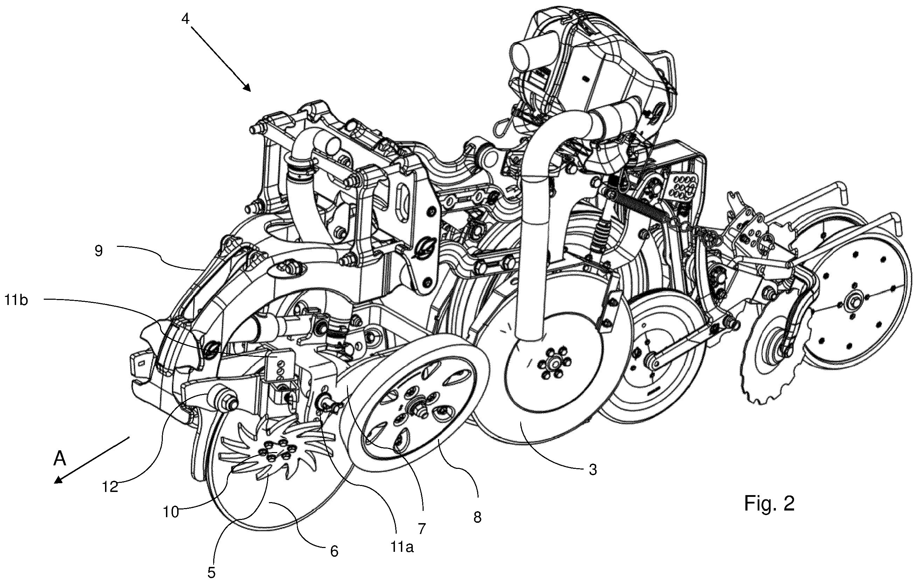

Das in Fig. 2 aus einer Ansicht von schräg vorne gezeigtes Säscharmodul 4 ist nicht zwangsläufig nur auf das Säschar 3 beschränkt, es können noch weitere Bauteile dazugehören, wie beispielsweise eine einem oder mehreren Säscharen 3 zugeordnete Vereinzelungsvorrichtung für das Saatgut, eine oder mehrere Schussleitungen, ein oder mehrere dem Säschar 3 zugeordnete Tiefenführungsmittel, ein oder mehrere Zustreichelemente und ein oder mehrere Verdichtungsmittel zur Nachverdichtung des Bodens. Wenn diese Bauteile nicht zu einem Säscharmodul 4 gehören, können sie auch separat vom Säschar 3 an einer Sämaschine 1 befestigt sein.

Zu einem Säschar 3 oder einem Säscharmodul 4 kann insbesondere auch zumindest ein Räumwerkzeug 5 gehören, das dem zugehörigen Säschar 3 vorgeordnet ist, um den Boden vor dem Säschar 3 von Pflanzenresten und Kluten zu räumen. Im Ausführungsbeispiel ist das Räumwerkzeug 5 als ein Räumstern ausgebildet, der auf einer Tragwelle 10 drehbar gelagert ist. Das Räumwerkzeug 5 ist dem Säschar 3 in Arbeitsrichtung A der Sämaschine 1 gesehen vorgeordnet. Das Räumwerkzeug 5 ist über die Tragwelle 10 drehbar gelagert, die wiederum ortsfest mit dem Tragarm 7 verbunden ist. Dadurch ist auch das Räumwerkzeug 5 ortsfest mit dem Tragarm 7 verbunden. Der Tragarm 7 ist schwenkbeweglich an der Konsole 9 gehalten, die fest mit dem Rahmen 2 verbunden ist.

Mit dem Tragarm 7 ist ein separat vom Räumwerkzeug 5 gelagertes Tiefenführungsmittel 8 verbunden, das sich beim Betrieb der Sämaschine 1 auf dem Boden abstützt. Das Tiefenführungsmittel 8 stützt damit gleichzeitig den Tragarm 7 und das daran ortsfest gehaltene Räumwerkzeug 5 auf dem Boden ab. Bei einer unebenen Bodenoberfläche folgt das Tiefenführungsmittel 8 bei der Säarbeit der Sämaschine der unebenen Bodenoberfläche und führt auf diese Weise das Räumwerkzeug 5 in einem zumindest annähernd gleichbleibenden Abstand über den Boden. Das im Ausführungsbeispiel als Stützrad ausgebildete Tiefenführungsmittel 8 weist einen größeren Durchmesser auf als das Räumwerkzeug 5.

Im Ausführungsbeispiel ist dem in Fig. 2 gezeigten Säschar 3 zusätzlich noch ein Düngeschar 6 vorgeordnet. Auch das Düngeschar 6 ist an dem Tragarm 7 gehalten, an dem außerdem noch das Tiefenführungsmittel 8 in Gestalt eines Stützrades befestigt ist. Das Düngeschar 6 ist seitlich neben dem Räumwerkzeug 5 angeordnet. Das Düngeschar 6 ist über eine Verstellkulisse 11a höhenverstellbar mit dem Tragarm 7 verbunden. Ist das Düngeschar 6 über die Verstellkulisse 11a in eine Höhenlage eingestellt, bleibt es in dieser Höhenlage mit dem Tragarm 7 verbunden, bis es die Höhenlage über eine erneute Höhenverstellung verändert wird. Das Düngeschar 6 ist über die Verstellkulisse 11a höhenverstellbar im Verhältnis zum Räumwerkzeug 5 und dem Tiefenführungsmittel 8 am Tragarm 7.

Auch die Tragwelle 10 und damit das Räumwerkzeug 5 sind über eine Verstellkulisse 11b in verschiedenen Höhenlagen ortsfest an dem Tragarm 7 festlegbar. Auch hier bleiben die Tragwelle 10 und das Räumwerkzeug 5 in dieser Höhenlage mit dem Tragarm 7 ortsfest verbunden, bis die Höhenlage über eine erneute Höhenverstellung verändert wird. Das Räumwerkzeug 5 ist über die Verstellkulisse 11b höhenverstellbar im Verhältnis zum Düngeschar 6 und dem Tiefenführungsmittel 8 am Tragarm 7. Im Ausführungsbeispiel ist für das Tiefenführungsmittel 8 keine Verstellmöglichkeit gezeigt, eine solche ist aber ohne Schwierigkeiten realisierbar.

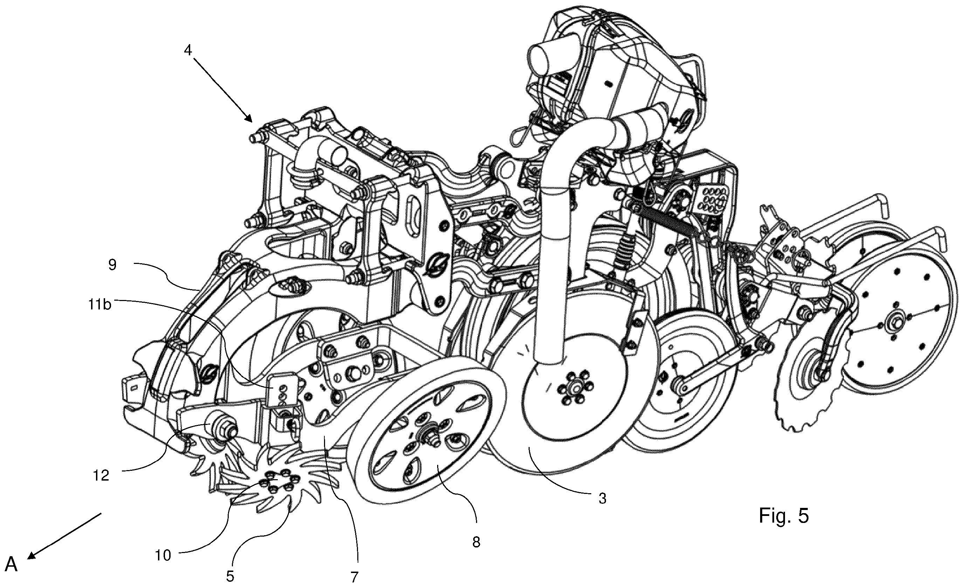

Insbesondere in den in Fig. 2 und 5 gezeigten Ansichten ist erkennbar, dass das Räumwerkzeug 5 und das Tiefenführungsmittel 8 zur Vertikalen geneigt und das Räumwerkzeug 5 zusätzlich auch zur Arbeitsrichtung A der Sämaschine 1 in einem Winkel angestellt sind.

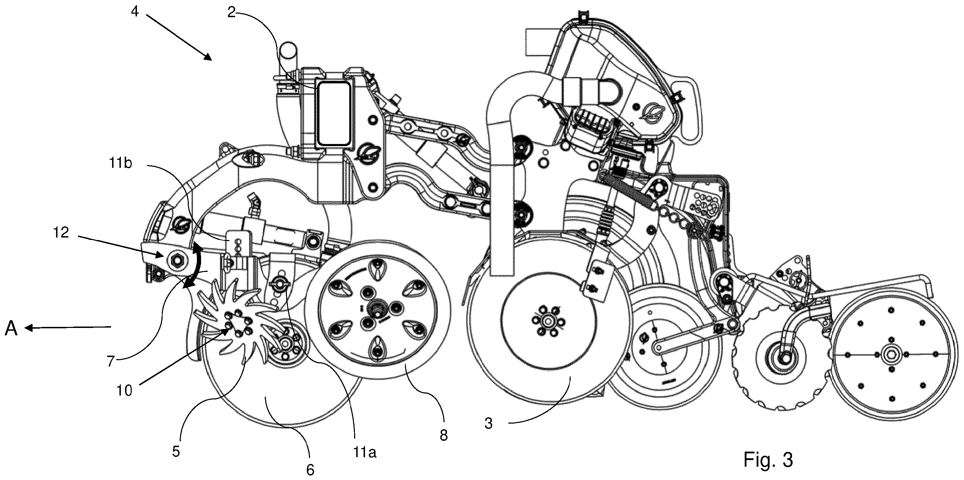

In Fig. 3 ist ein mit einem Düngeschar 6 ausgestattetes Säscharmodul 4 aus einer Seitenansicht gezeigt. Mit dem Doppelpfeil ist die Schwenkbeweglichkeit des Tragarms 7 um den Drehpunkt 12 herum angedeutet, dessen Auslenkung nach oben oder unten vom Tiefenführungsmittel 8 bestimmt wird, das bei der Bewegung der Sämaschine über ein Feld die Bodenoberfläche kopiert. Da der Drehpunkt 12 des Tragarms 7 in Arbeitsrichtung A der Sämaschine 1 gesehen vor dem Räumwerkzeug 5 liegt, ist das Räumwerkzeug 5 in einer gezogenen Anordnung gehalten, in der es bei Überlast ohne Schwierigkeiten nach oben hin ausweichen kann.

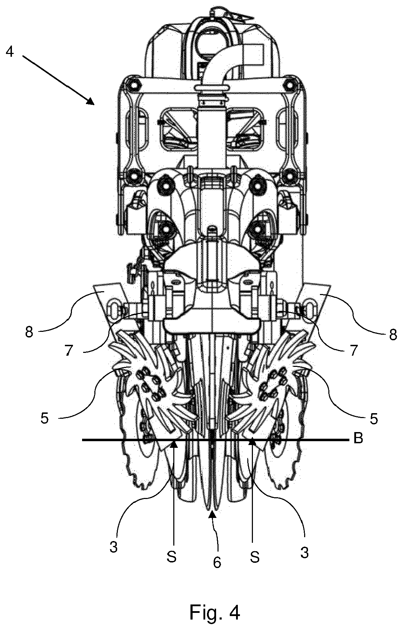

In Fig. 4 ist das Säscharmodul aus einer Ansicht von vorne gezeigt. In diesem Ausführungsbeispiel ist das Säscharmodul 4 mit Düngescharen 6 für ein Säscharmodul 4 ausgestattet, das eine Doppelreihe des Saatguts legt. Aus der Ansicht von vorne ist erkennbar, dass die Düngeschare 6 in Arbeitsrichtung A der Sämaschine gesehen seitlich versetzt zu der jeweiligen Anordnungsreihe Räumwerkzeug 5 - Tiefenführungsmittel 8 - Säschar 3 angeordnet sind, die in einer Spur S laufen. Die Düngeschare 6 reichen auch tiefer in den Boden hinein als die Säschare 3. Die Düngeschare 6 schaffen eine Düngefurche, die seitlich versetzt neben der Säfurche und der Spur S liegt und es den Wurzeln des Saatguts nach dem Keimen ermöglichen, die im Dünger enthaltenen Nährstoffe aus einer Zone unterhalb der Saatkörner aufzunehmen.

Das Tiefenführungsmittel 8 ist dem Räumwerkzeug 5 nachlaufend am Tragarm 7 gehalten. Dadurch laufen das Räumwerkzeug 5 und das Tiefenführungsmittel 8 in einer gemeinsamen Spur S auf dem Boden B, wenn die Sämaschine 8 über ein Feld bewegt wird. Auch das Säschar 3 ist in einer Flucht mit dem Räumwerkzeug 5 und dem Tiefenführungsmittel 8 angeordnet, wie aus Fig. 4 ersichtlich ist. Durch diese Anordnung räumt das Räumwerkzeug 5 den Boden vor dem Tiefenführungsmittel 8 von Pflanzenresten und Kluten frei, das Tiefenführungsmittel 8 rollt dahinter über den freigeräumten Boden und rückverfestigt diesen, und das Säschar 3 schneidet dahinter die Säfurche in den vorbereiteten Boden. An dieser Stelle sei bemerkt, dass es sich bei dem als Ausführungsbeispiel gezeigten Säscharmodul 4 um eine Vorrichtung zum Legen einer doppelten Säfurche handelt, so dass das Säscharmodul 4 zwei Säschare 3, zwei Räumwerkzeuge 5 und zwei Tiefenführungsmittel 8 aufweist. Die Erfindung ist natürlich auch an einem Säscharmodul 4 realisierbar, das nur ein Säschar 3, ein Räumwerkzeug 5 und ein Tiefenführungsmittel 8 aufweist und damit auch nur eine Säfurche legt. Genauso können auch zwei Säschare 3 vorgesehen sein, die von zwei Seiten her eine Säfurche in den Boden schneiden, und es können zwei Räumwerkzeuge 5 vorgesehen sein, die von zwei Seiten her eine Säfurche freiräumen, oder es ist nur ein Tiefenführungsmittel 8 vorhanden, um damit zwei Räumwerkzeuge 5 und/oder zwei Düngeschare 6 in ihrer Arbeitstiefe zu steuern. Beliebige Kombinationen solcher Anordnungen sind abweichend vom Ausführungsbeispiel denkbar.

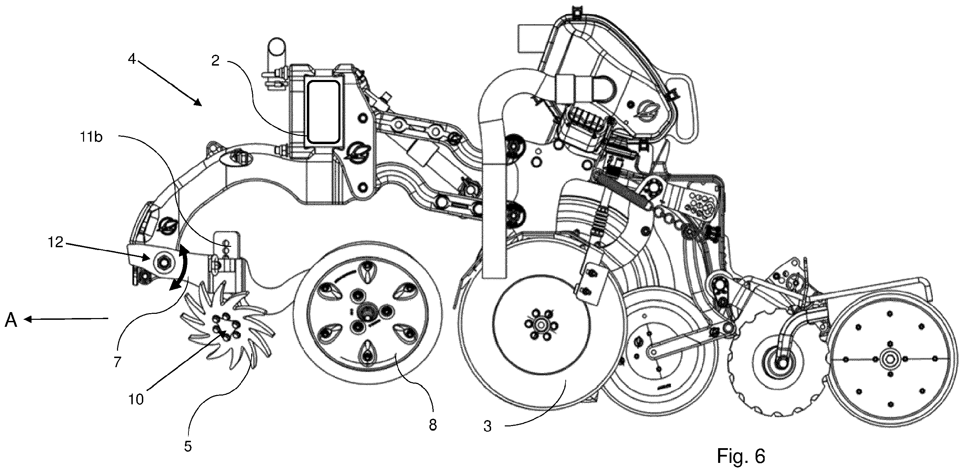

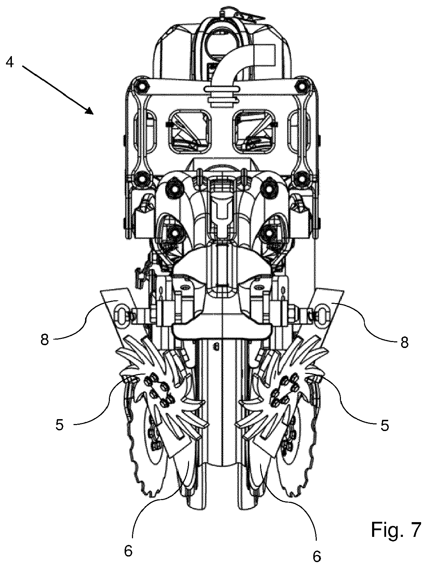

Die Fig. 5, 6 und 7 zeigen ein Säscharmodul 4, das nicht mit einem Düngeschar 6 ausgestattet ist. Auch in Fig. 6 zeigt ein Doppelpfeil die Verschwenkbarkeit des Tragarms 7, dessen Bewegung durch das Abrollverhalten des Tiefenführungsmittels 8 über den Boden bestimmt wird und von dem die jeweilige Höhenlage des Räumwerkzeugs 5 abhängig ist.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 1: Sämaschine
- 2: Rahmen
- 3: Säschar
- 4: Säscharmodul
- 5: Räumwerkzeug
- 6: Düngeschar
- 7: Tragarm
- 8: Tiefenführungsmittel
- 9: Konsole
- 10: Tragwelle
- 11: Verstellkulisse
- 12: Drehpunkt
- A: Arbeitsrichtung
- B: Boden
- S: Spur

## Patentansprüche

1. Sämaschine (1) mit einer an einem Rahmen (2) befestigten Anordnung von einem Säschar (3), wobei dem Säschar (3) in Arbeitsrichtung (A) der Sämaschine (1) gesehen ein Räumwerkzeug (5) vorgeordnet ist, **dadurch gekennzeichnet, dass** das Räumwerkzeug (5) ortsfest mit einem Tragarm (7) verbunden ist, der beweglich mit dem Rahmen (2) verbunden ist, und mit dem Tragarm (7) ein separat vom Räumwerkzeug (5) gelagertes Tiefenführungsmittel (8) verbunden ist, das sich beim Betrieb der Sämaschine (1) auf dem Boden (B) abstützt.

2. Sämaschine (1) nach Anspruch 1, **dadurch gekennzeichnet, dass** das Räumwerkzeug (5) als ein auf einer Tragwelle (10) drehbar gelagerter Räumstern ausgebildet ist.

3. Sämaschine (1) nach Anspruch 1 oder 2, **dadurch gekennzeichnet, dass** das Tiefenführungsmittel (8) als Stützrad ausgebildet ist und einen gleich großen oder größeren Durchmesser aufweist als das Räumwerkzeug (5).

4. Sämaschine (1) nach einem der vorhergehenden Ansprüche, **dadurch gekennzeichnet, dass** das Räumwerkzeug (5) und/oder das Tiefenführungsmittel (8) in verschiedenen Höhenlagen ortsfest an dem Tragarm (7) festlegbar sind.

5. Sämaschine (1) nach einem der vorhergehenden Ansprüche, **dadurch gekennzeichnet, dass** das Tiefenführungsmittel (8) dem Räumwerkzeug (5) nachlaufend am Tragarm (7) gehalten ist.

6. Sämaschine (1) nach Anspruch 5, **dadurch gekennzeichnet, dass** das Säschar (3) in einer Flucht mit dem Räumwerkzeug (5) und dem Tiefenführungsmittel (8) angeordnet ist.

7. Sämaschine (1) nach einem der vorhergehenden Ansprüche, **dadurch gekennzeichnet, dass** der Drehpunkt des Tragarms (7) in Arbeitsrichtung (A) der Sämaschine (1) gesehen vor dem Räumwerkzeug (5) liegt.

8. Sämaschine (1) nach einem der vorhergehenden Ansprüche, **dadurch gekennzeichnet, dass** das Räumwerkzeug (5) und das Tiefenführungsmittel (8) zur Vertikalen geneigt und das Räumwerkzeug (5) zusätzlich auch zur Arbeitsrichtung (A) der Sämaschine (1) in einem Winkel angestellt sind.

9. Sämaschine (1) nach einem der vorhergehenden Ansprüche, **dadurch gekennzeichnet, dass** seitlich neben dem Räumwerkzeug (5) ein Düngeschar (6) angeordnet ist.

10. Sämaschine (1) nach Anspruch 9, **dadurch gekennzeichnet, dass** das Düngeschar (6) am Tragarm (7) befestigt ist.

11. Sämaschine (1) nach Anspruch 9 oder 10, **dadurch gekennzeichnet, dass** das Düngeschar (6) höhenverstellbar im Verhältnis zum Räumwerkzeug (5) und dem Stützrad am Tragarm (7) oder am Rahmen (2) gehalten ist.

12. Sämaschine (1) nach einem der vorhergehenden Ansprüche, **dadurch gekennzeichnet, dass** der Tragarm (7) schwenkbeweglich mit einer Konsole (9) verbunden ist, die fest mit dem Rahmen (2) verbunden ist.
